(19) **Europäisches Patentamt / European Patent Office / Office européen des brevets**

(11) **EP 4 644 438 A1**

(12) **EUROPEAN PATENT APPLICATION**

(43) Date of publication:
05.11.2025 Bulletin 2025/45

(21) Application number: 24173396.3

(22) Date of filing: 30.04.2024

(51) International Patent Classification (IPC):
*C08F 210/06* (2006.01)    *C08L 23/14* (2006.01)
*C08F 2/00* (2006.01)

(52) Cooperative Patent Classification (CPC):
(C-Sets available)
C08L 2203/18; C08L 2205/03          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Borealis GmbH
1020 Vienna (AT)

(72) Inventors:
• WANG, Jingbo
4021 Linz (AT)
• GAHLEITNER, Markus
4021 Linz (AT)
• LESKINEN, Pauli
06101 Porvoo (FI)

(74) Representative: Maiwald GmbH
Elisenhof
Elisenstraße 3
80335 München (DE)

(54) **POLYPROPYLENE COMPOSITION FOR PIPES**

(57)    The present invention relates to a polypropylene composition for pipes, characterized in that the polypropylene composition comprises a random propylene-ethylene-α-olefin terpolymer and a polypropylene (PP) selected from a propylene homopolymer (H-PP) or a heterophasic propylene copolymer (HECO), a pipe comprising the polypropylene composition and the use of the polypropylene composition as a pipe.

EP 4 644 438 A1

(52) Cooperative Patent Classification (CPC): (Cont.)

C-Sets
**C08F 210/06, C08F 2/001;**
**C08F 210/06, C08F 210/02, C08F 210/14;**
**C08L 23/142, C08L 23/142, C08L 23/12;**
**C08L 23/142, C08L 23/142, C08L 23/12,**
**C08L 23/16;**
C08F 210/06, C08F 210/02, C08F 210/14,
C08F 2500/05, C08F 2500/12, C08F 2500/27,
C08F 2500/33, C08F 2500/34, C08F 2500/35,
C08F 2500/36

## Description

The present invention relates to a polypropylene composition for pipes, characterized in that the polypropylene composition comprises a random propylene-ethylene-$\alpha$-olefin terpolymer and a polypropylene (PP) selected from a propylene homopolymer (H-PP) or a heterophasic propylene copolymer (HECO), a pipe comprising the polypropylene composition and the use of the polypropylene composition as a pipe.

## Technical Background

Polypropylene (PP) materials are frequently used due to their good cost-to-performance ratio for various pipe applications, such as fluid transport during which the fluid is pressurized and/or heated.

In particular, polypropylene materials are used in applications for plumbing and heating, such as in-house hot and cold water pressure pipes and fittings, floor and wall heating systems and radiator connections.

However, in order to further improve the cost-to-performance ratio of PP pipes, there is still a need to improve the pipe material properties so that *inter alia* the wall thickness of the pipes can be reduced, thereby saving costs in material and reducing the related carbon footprint.

Accordingly, polypropylene material suitable for pipes with a reduced wall thickness needs to show an improved resistance against pressure in order to compensate for the thinner walls.

EP 2585528 A1 defines a polyolefin composition comprising 7 to 19 wt.-% of a copolymer of propylene and 1-hexene containing less than 1 wt.-% of recurring units derived from hexene-1 and 81 to 93 wt.-% of a heterophasic polypropylene composition comprising 5 to 14 wt.-% of a copolymer of ethylene and propylene comprising 50 to 65 wt.-% of units derived from ethylene, said polymeric composition having a melt flow rate (MFR$_2$) of 0.05 to 10 g/10 min. Said compositions are characterized by a high stiffness and impact strength, but limited ductility and pressure resistance.

EP 3387066 A1 describes a propylene polymer composition comprising 40 to 80 wt.-% of a propylene 1-hexene copolymer containing 5.5 to 9.0 wt.-% of 1-hexene derived units having a Melt Flow Rate (MFR$_2$) from 3.5 to 12.0 g/10 min and 20 to 60 wt.-% of a propylene ethylene copolymer containing 1.5 to 6.5 wt.-% of ethylene derived units having a Melt Flow Rate (MFR$_2$) from 3.5 to 12.0 g/10 min. The resulting compositions are not suitable for pipes, but rather for films.

While propylene-based terpolymers are known as materials for pipes, the present invention is based on the finding that pipes comprising a polypropylene composition comprising a random propylene-ethylene-$\alpha$-olefin terpolymer and a polypropylene (PP) modifier, wherein the polypropylene (PP) is selected from a propylene homopolymer (H-PP) or a heterophasic propylene copolymer (HECO), have superior pressure resistance.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and aspecting the present invention, the following terminology will be used in accordance with the definitions set out below.

For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

A random propylene-ethylene-$\alpha$-olefin terpolymer according to the present invention is a copolymer of propylene monomer units, ethylene comonomer units and $\alpha$-olefin comonomer units, in which the ethylene and $\alpha$-olefin comonomer units are distributed randomly over the polymeric chain. The term "terpolymer" defines that only units derived from one kind of $\alpha$-olefin comonomer is present in the polymer besides units derived from propylene and ethylene.

A polypropylene composition in the present disclosure is a composition in which the polymeric components have a combined amount of units derived from propylene of at least 50 wt.-%, based on the total weight of the polymeric components.

Usually, a propylene polymer comprising at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal propylene polymer, a propylene polymer consisting of two fractions only is called "bimodal", whereas a propylene polymer consisting of three fractions only is called "trimodal". A unimodal propylene polymer only consists of one fraction. Thereby, the term "different" means that the propylene polymer fractions differ from each other in at least one property, preferably in the weight average molecular weight - which can also be measured in different melt flow rates of the fractions - or comonomer content or both.

The regio-defects of propylene polymers can be of three different types, namely 2,1-erythro (2,1e), 2,1-threo (2,1t) and 3,1 defects. A detailed description of the structure and mechanism of formation of regio-defects in polypropylene can be found in Chemical Reviews 2000, 100(4), pages 1316 to 1327. These defects are measured using $^{13}$C NMR as described in more detail below.

The term "2,1 regio-defects" as used in the present invention defines the sum of 2,1 erythro regio-defects and 2,1 threo regio-defects.

"Heterophasic" indicates the presence of a matrix phase and a dispersed phase. The presence of a heterophasic nature in a polymer, such as polypropylene, can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

A heterophasic propylene copolymer usually differentiates from a one-phasic propylene copolymer in that it shows two distinct glass transition temperatures Tg which are attributed to the matrix phase and the elastomeric phase.

A propylene homopolymer is a polymer, which essentially consists of propylene monomer units. Due to impurities especially during commercial polymerization processes a propylene homopolymer can comprise up to 1.5 mol% comonomer units. Typically, such comonomer units are units derived from ethylene, which can be present in the propylene homopolymers in up to 1.0 wt.-%.

## Summary of the Invention

The invention relates to a polypropylene composition for pipes, characterized in that the polypropylene composition comprises

i) 80 to 99 wt.-%, based on the total weight of the composition, of a random propylene-ethylene-$\alpha$-olefin terpolymer, wherein the $\alpha$-olefin is selected from a C4 to C8 $\alpha$-olefin, preferably is 1-butene or 1-hexene, more preferably is 1-hexene; and

ii) 1 to 20 wt.-%, based on the total weight of the composition, of a polypropylene (PP), wherein the polypropylene (PP) is selected from a propylene homopolymer (H-PP) or a heterophasic propylene copolymer (HECO);

wherein the random propylene-ethylene-$\alpha$-olefin terpolymer

- comprises a total amount of units derived from ethylene (C2) in the range of from 0.1 to 5.0 mol-%, preferably 1.0 to 4.0 mol-%, more preferably 1.5 to 3.0 mol-%, based on the total weight of the terpolymer, determined by quantitative $^{13}$C-NMR spectroscopy, and
- has a melt flow rate (MFR$_2$), determined according to ISO 1133 at 230 °C at a load of 2.16 kg, in the range of from 0.1 to 1.0 g/10 min; and

wherein the polypropylene (PP)

- has a melt flow rate (MFR$_2$), determined according to ISO 1133 at 230 °C at a load of 2.16 kg, in the range of from 0.1 to 5.0 g/10 min, preferably from 0.1 to 1.0 g/10 min.

Further, the present invention relates to a pipe comprising in an amount of more than 90.0 wt.-% the polypropylene composition as described above or below.

Still further, the present invention relates to a use of the polypropylene composition as described above or below as a pipe.

## Detailed Description

The inventive polypropylene composition comprises

- a random propylene-ethylene-$\alpha$-olefin terpolymer, and
- a polypropylene (PP), wherein the polypropylene (PP) is selected from a propylene homopolymer (H-PP) or a heterophasic propylene copolymer (HECO).

*Random propylene-ethylene-α-olefin terpolymer*

The random propylene-ethylene-α-olefin terpolymer is the main component of the polypropylene composition and is present in an amount of 80 to 99 wt.-%, preferably 88 to 92 wt.-%, based on the total weight of the composition.

The α-olefin of the random propylene-ethylene-α-olefin terpolymer is selected from a C4 to C8 α-olefin. Preferably, the α-olefin is selected from 1-butene or 1-hexene. More preferably, the α-olefin is 1-hexene.

The random propylene-ethylene-α-olefin terpolymer comprises a total amount of units derived from ethylene (C2) in the range of from 0.1 to 5.0 mol.-%, preferably 1.0 to 4.0 mol.-%, more preferably 1.5 to 3.0 mol.-%, based on the total weight of the terpolymer, determined by quantitative $^{13}$C-NMR spectroscopy.

Further, the random propylene-ethylene-α-olefin terpolymer has a melt flow rate (MFR$_2$), determined according to ISO 1133 at 230 °C at a load of 2.16 kg, in the range of from 0.1 to 1.0 g/10 min, preferably of from 0.1 to 0.5 g/10 min.

The amount of units derived from the α-olefin in the random propylene-ethylene-α-olefin terpolymer is preferably in the range of from 0.5 to 5.0 mol.-%, preferably 0.8 to 2.0 mol.-%, based on the total weight of the terpolymer, determined by quantitative $^{13}$C-NMR spectroscopy.

It is further preferred that the molar ratio in the random propylene-ethylene-α-olefin terpolymer between units derived from ethylene and units derived from the α-olefin is in the range of from 5:1 to 1:1, more preferably of 3:1 to 1.8:1.

The remaining units besides the units derived from the ethylene and the α-olefin units of the random propylene-ethylene-α-olefin terpolymer are units derived from propylene.

The xylene cold soluble content (XCS), as determined according to ISO 16152, of the random propylene-ethylene-α-olefin terpolymer is preferably in the range of from 5.0 to 12.0 wt.-%, more preferably in the range of from 7.0 to 11.0 wt.-%.

It is preferred that the random propylene-ethylene-α-olefin terpolymer is polymerized in the presence of a Ziegler-Natta-catalyst system.

Accordingly, the random propylene-ethylene-α-olefin terpolymer preferably has a content of 2,1- regio-defects, as determined by quantitative $^{13}$C-NMR spectroscopy, of less than 0.40 mol%, preferably of less than 0.05 mol.-%, more preferably of 0.0 mol%.

Further, it is preferred that the random propylene-ethylene-α-olefin terpolymer is a multimodal random propylene-ethylene-α-olefin terpolymer in view of the molecular weight (MFR$_2$) and comprises at least two random propylene-ethylene-α-olefin terpolymer fractions (A) and (B), wherein the combined amount of the two random propylene-ethylene-α-olefin terpolymer fractions (A) and (B) is at least 90 wt.-%, preferably in the range of 95 to 100 wt.-%, based on the total weight of the random propylene-ethylene-α-olefin terpolymer.

Accordingly, it is preferred, that the multimodal propylene-ethylene-α-olefin terpolymer is bimodal, i.e. consists of the two random propylene-ethylene-α-olefin terpolymer fractions (A) and (B).

In the case that the random propylene-ethylene-α-olefin terpolymer is a multimodal random propylene-ethylene-α-olefin terpolymer, the MFR$_2$ of the first random propylene-ethylene-α-olefin terpolymer fraction (A) is preferably in the range of 0.3 to 1.0 g/10 min, more preferably in the range of 0.4 to 0.8 g/10 min, and the MFR$_2$ of the second random propylene-ethylene-α-olefin terpolymer fraction (B) is in the range of 0.02 to 0.50 g/10 min, more preferably in the range of 0.05 to 0.20 g/10 min. Preferably, the MFR$_2$ of the first random propylene-ethylene-α-olefin terpolymer fraction (A) is higher than the MFR$_2$ of the second random propylene-ethylene-α-olefin terpolymer fraction (B), and more preferably the MFR$_2$ of the first random propylene-ethylene-α-olefin terpolymer fraction (A) is at least 0.2 g/10 min, even more preferably 0.3 to 1.0 g/10 min higher than the MFR$_2$ of the second random propylene-ethylene-α-olefin terpolymer fraction (B).

The weight ratio between the first random propylene-ethylene-α-olefin terpolymer fraction (A) and the second random propylene-ethylene-α-olefin terpolymer fraction (B) is preferably in the range of 40:60 to 60:40.

Besides the multimodality in view of the MFR$_2$, the random propylene-ethylene-α-olefin terpolymer is also preferably multimodal in view of the ethylene content of the random propylene-ethylene-α-olefin terpolymer fractions.

Accordingly, in a preferred embodiment, the ethylene content of the first random propylene-ethylene-α-olefin terpolymer (A) is in the range of 1.2 to 2.4 mol.-%, more preferably in the range of 1.4 to 2.2 mol.-%, and the ethylene content of the second random propylene-ethylene-α-olefin terpolymer fraction (B) is in the range of 2.5 to 3.8 mol.-%, more preferably in the range of 2.8 to 3.6 mol%. Preferably, the ethylene content of the first random propylene-ethylene-α-olefin terpolymer fraction (A) is at least 1.0 mol%, more preferably 1.2 to 3.0 mol.-%, lower than the ethylene content of the second random propylene-ethylene-α-olefin terpolymer fraction (B).

A preferred way of achieving multimodality is by polymerizing the respective polymer in a multistage polymerization process.

In the following, preferred process conditions to obtain the random propylene-ethylene-α-olefin terpolymer as described above are disclosed.

The random propylene-ethylene-α-olefin terpolymer is preferably polymerized in a multistage process, which is a sequential polymerization process with at least two polymerization reactors connected in series.

In a particularly preferred embodiment, a first polymer fraction of the random propylene-ethylene-α-olefin terpolymer is produced in a slurry phase reactor and subsequently a second polymer fraction of the random propylene-ethylene-$\alpha$-olefin terpolymer is produced in a gas phase reactor.

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell Industries.

In a preferred embodiment, the random propylene-ethylene-$\alpha$-olefin terpolymer is obtainable by the process comprising the steps of

a) Randomly polymerizing propylene, ethylene and an $\alpha$-olefin in the presence of a Ziegler-Natta catalyst system in a first polymerization reactor for producing a first random propylene-ethylene-$\alpha$-olefin terpolymer fraction (A);
b) Transferring a polymerization mixture comprising the Ziegler-Natta catalyst system and the first random propylene-ethylene-$\alpha$-olefin terpolymer fraction (A) from the first polymerization reactor to a second polymerization reactor;
c) Polymerizing propylene, ethylene and the same $\alpha$-olefin as in the first polymerization reactor in the presence of the Ziegler-Natta catalyst system in the second polymerization reactor for producing a second random propylene-ethylene-$\alpha$-olefin terpolymer fraction (B);
d) Obtaining a random propylene-ethylene-$\alpha$-olefin terpolymer comprising the first and second random propylene-ethylene-$\alpha$-olefin terpolymer fractions (A) and (B).

The first polymerization reactor preferably is a slurry phase reactor, such as a loop reactor.

It is preferred that the operating temperature in the first polymerization reactor, preferably the loop reactor, is in the range from 62 to 72 °C, more preferably in the range from 65 to 69 °C.

Typically, the pressure in the first polymerization reactor, preferably in the loop reactor, is in the range from 4000 to 7000 kPa, preferably from 5000 to 6000 kPa.

The ethylene to propylene ratio (C2/C3 ratio) in the first polymerization reactor, preferably in the loop reactor, is preferably in the range from 2.0 to 10.0 mol/kmol, more preferably from 3.0 to 5.0 mol/kmol.

The $\alpha$-olefin, preferably 1-hexene to propylene ratio ($\alpha$-olefin /C3 ratio) in the first polymerization reactor, preferably in the loop reactor, is preferably in the range of from 10 to 250 mol/kmol, more preferably from 50 to 200 mol/kmol, yet more preferably 80 to 150 mol/kmol.

Preferably hydrogen is added in the first polymerization reactor in order to control the molecular weight, i.e. the melt flow rate $MFR_2$. Preferably the hydrogen to propylene ratio (H2/C3 ratio) in the first polymerization reactor, preferably the loop reactor, is in the range from 0.1 to 2.0 mol/kmol, more preferably from 0.2 to 1.0 mol/kmol.

It is preferred that the first random propylene-ethylene-$\alpha$-olefin terpolymer fraction has a melt flow rate $MFR_2$ (230 °C, 2.16 kg, ISO 1133) in the range of 0.1 to 2.0 g/10 min, preferably in the range of 0.3 to 1.0 g/10 min.

The second polymerization reactor is preferably a gas phase reactor, such as a fluidized bed gas phase reactor.

It is preferred that the operating temperature in the second polymerization reactor, preferably the gas phase reactor, is in the range from 75 to 85 °C, more preferably in the range from 78 to 82 °C.

Typically, the pressure in the second polymerization reactor, preferably in the gas phase reactor, is in the range of from 1500 to 4000 kPa, preferably from 1800 to 2500 kPa.

The ethylene to propylene ratio (C2/C3 ratio) in the second polymerization reactor, preferably in the gas phase reactor, is preferably in the range from 10.0 to 30.0 mol/kmol, more preferably from 15.0 to 25.0 mol/kmol.

The $\alpha$-olefin, preferably 1-hexene to propylene ratio ($\alpha$-olefin /C3 ratio) in the second polymerization reactor, preferably in the gas phase reactor, is preferably in the range from 20.0 to 60.0 mol/kmol, more preferably from 33.0 to 45.0 mol/kmol.

Preferably hydrogen is added in the second polymerization reactor in order to control the molecular weight, i.e. the melt flow rate $MFR_2$. Preferably the hydrogen to propylene ratio (H2/C3 ratio) in the second polypropylene reactor, preferably the gas phase reactor, is in the range from 0.1 to 2.0 mol/kmol, more preferably from 0.5 to 1.2 mol/kmol.

It is preferred that the combined first and second random propylene-ethylene-$\alpha$-olefin terpolymer fractions have a melt flow rate $MFR_2$ (230 °C, 2.16 kg, ISO 1133) in the range of 0.05 to 0.5 g/10 min, preferably in the range of 0.1 to 0.3 g/10 min.

The preparation of the first and second polymer fractions can comprise in addition to the (main) polymerization stages in the at least two polymerization reactors prior thereto a pre-polymerization in a pre-polymerization reactor upstream to the first polymerization reactor.

In the pre-polymerization reactor, a polypropylene is produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first reactor. In one embodiment, all components of the Ziegler-Natta catalyst system are only added in the pre-polymerization reactor, if a pre-polymerization is applied.

The pre-polymerization reaction is typically conducted at a temperature of 0 to 60 °C, preferably from 10 to 40 °C, and more preferably from 12 to 30 °C.

The pressure in the pre-polymerization reactor is not critical but must be sufficiently high to maintain the reaction mixture in liquid phase. Thus, the pressure may be from 4000 to 7000 kPa.

In a preferred embodiment, the pre-polymerization is conducted as bulk slurry polymerization in liquid propylene, i.e. the liquid phase mainly comprises propylene, optionally with inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst system and the polypropylene produced in the pre-polymerization reactor is obtained. Preferably, the Ziegler-Natta catalyst system is (finely) dispersed in the polypropylene. In other words, the Ziegler-Natta catalyst system introduced in the pre-polymerization reactor is split into smaller fragments that are evenly distributed within the growing polypropylene. The sizes of the introduced Ziegler-Natta catalyst system as well as of the obtained fragments are not of essential relevance for the instant invention and within the skilled knowledge.

As mentioned above, if a pre-polymerization is used, subsequent to said pre-polymerization, the mixture of the Ziegler-Natta catalyst system and the polypropylene produced in the pre-polymerization reactor is transferred to the first polymerization reactor. Typically, the total amount of polypropylene produced in the pre-polymerization reactor is rather low and typically not more than 5.0 wt.-%, more preferably not more than 4.0 wt.-%, still more preferably in the range from 0.2 to 4.0 wt.-%, like in the range from 0.2 of to 3.0 wt.-%, based on the total combined weight.

In case that pre-polymerization is not used, propylene and the other ingredients such as the Ziegler-Natta catalyst system can be directly introduced into the first polymerization reactor.

The residence times of the polymerization mixtures in the different polymerization stages are adjusted to obtain the amounts of the first and second polymer fractions in the combined first and second polymer fractions.

The amount of the polypropylene produced in the pre-polymerization reactor, if present, is generally added to the amount of the first polymer fraction.

Preferably the first random propylene-ethylene-$\alpha$-olefin terpolymer fraction (A) is present in an amount of from 42 to 62 wt.-%, more preferably from 48 to 58 wt.-%, based on the total weight of the random propylene-ethylene-$\alpha$-olefin terpolymer.

Preferably the second random propylene-ethylene-$\alpha$-olefin terpolymer fraction (B) is present in an amount of from 33 to 53 wt.-%, more preferably from 40 to 48 wt.-%, based on the total weight of the random propylene-ethylene-$\alpha$-olefin terpolymer.

In a preferred embodiment, the random propylene-ethylene-$\alpha$-olefin terpolymer is polymerized in the presence of a bicomponent Ziegler-Natta-catalyst system including a first Ziegler Natta catalyst component (ZN1) and a second Ziegler Natta catalyst component (ZN2), wherein at least the internal donors of the first and second Ziegler Natta catalyst components differ structurally.

It is further preferred that the each of the first and second Ziegler Natta catalyst components comprises compounds of a transition metal of Group 4 to 6 of IUPAC, like titanium, a Group 2 metal compound, like a magnesium, and an internal donor being a non-phthalic compound.

Preferably the first Ziegler Natta catalyst component (ZN1) comprises an internal donor selected from the group of maleates, citraconates, cyclohexene-1,2-dicarboxylates and any derivatives and/or mixtures thereof. More preferably, the first Ziegler Natta catalyst component (ZN1) comprises a citraconate as an internal donor. Suitable Ziegler Natta catalysts for the first Ziegler Natta catalyst component (ZN1) are described for example in WO 2016/066446 A1.

Preferably the second Ziegler Natta catalyst component (ZN2) is a >4th generation, high yield Ziegler Natta catalyst.

Preferably the second Ziegler Natta catalyst component (ZN2) is a >4th generation, high yield Ziegler Natta catalyst, which comprises compounds of a transition metal of Group 4 to 6 of IUPAC, like titanium, a Group 2 metal compound, like a magnesium, and an internal donor being a non-phthalic compound, preferably a non-phthalic acid ester and/or a non-phthalic diether, the ester more preferably being a diester of non-phthalic dicarboxylic acids, the diether more preferably being a 1,3-diether. Thus, the second Ziegler Natta catalyst component (ZN2) is preferably fully free of undesired phthalic compounds.

Further, the second Ziegler Natta catalyst component (ZN2) is preferably a solid catalyst with an external support material, like silica or MgCl$_2$, preferably MgCh. Preferably the Group 2 metal is magnesium. The transition metal compound of Group 4 to 6 is preferably a titanium compound (TC), most preferably a titanium halide, like TiCl$_4$.

The bicomponent Ziegler-Natta-catalyst can thereby be obtained by mixing the first Ziegler Natta catalyst component (ZN1) and the second Ziegler Natta catalyst component (ZN2) before introducing it into the polymerization reactor.

*Polypropylene (PP) modifiers*

The inventive polypropylene composition comprises besides the random propylene-ethylene-$\alpha$-olefin terpolymer a polypropylene (PP), wherein the polypropylene (PP) is selected from a propylene homopolymer (H-PP) or a heterophasic propylene copolymer (HECO). Mixtures of a propylene homopolymer (H-PP) and a heterophasic propylene copolymer (HECO) are also encompassed by the polypropylene (PP) as the mixture itself forms a heterophasic propylene copolymer (HECO) again.

The polypropylene (PP) is present in the propylene composition in an amount of 1 to 20 wt.-%, preferably 5 to 12 wt.-%, based on the total weight of the composition.

The melt flow rate ($MFR_2$), determined according to ISO 1133 at 230 °C at a load of 2.16 kg, of the polypropylene (PP) is in the range of from 0.1 to 5.0 g/10 min, preferably from 0.1 to 1.0 g/10 min.

It is preferred that the polypropylene (PP) comprises a polymeric nucleating agent, preferably a vinylcycloalkane polymer, more preferably poly(vinylcyclohexane) (pVCH).

Since the propylene compositions are for pipes which are preferably used for water applications, it is advantageous that the propylene composition does not comprise nucleating agents, such as typical small molecular weight nucleating agents like NA11 or DMDBS, that can contaminate the water flowing through the pipes. Accordingly, the polymeric nucleating agent is preferably the sole nucleating agent comprised in the polypropylene (PP).

Preferably, the polypropylene (PP) has a crystallization temperature $T_c$, determined by differential scanning calorimetry (DSC) according to ISO 11357 / part 3 /method C2, of more than 124 °C, more preferably in the range of 125 to 140 °C.

The melting temperature $T_m$, determined by differential scanning calorimetry (DSC) according to ISO 11357 / part 3 /method C2, is preferably in the range of 160 °C to 170 °C, more preferably of 165 °C to 170 °C.

The xylene cold soluble content (XCS), as determined according to ISO 16152, of the polypropylene (PP) is preferably in the range of from 1.0 to 20.0 wt.-%, more preferably in the range of from 8.0 to 12.0 wt.-%.

In a preferred embodiment, the polypropylene (PP) is a heterophasic propylene copolymer (HECO).

Preferably, the comonomer of the heterophasic propylene copolymer (HECO) is ethylene and the heterophasic propylene copolymer (HECO) comprises a total amount of units derived from ethylene (C2) in the range of from 2.0 to 10.0 wt.-%, preferably 3.0 to 8.0 wt.-%, more preferably 4.0 to 6.0 wt.-%, based on the total weight of the heterophasic propylene copolymer, determined by crystallization extraction (CRYSTEX) analysis.

The term heterophasic indicates that the heterophasic polypropylene copolymer has a matrix phase and a dispersed phase.

In order to characterize the matrix phase and the dispersed phase of a heterophasic propylene copolymer several methods are known. One method is the crystallization extraction (CRYSTEX).

This method is described below in the determination methods section. Thereby, the polymeric part of the polypropylene copolymer is characterized using trichlorobenzene (TCB) as a solvent. The obtained crystalline fraction (CF) consists essentially of the majority of the matrix phase and, if present, the crystalline part of the dispersed phase, while the obtained soluble fraction (SF) consists essentially of the majority of the dispersed phase and, if present, the amorphous part of the matrix phase. Due to the differences in the separation methods of xylene extraction and crystallization extraction (CRYSTEX) the properties of XCS/XCI fractions on the one hand and crystalline/soluble (CF/SF) fractions on the other hand are not exactly the same, meaning that the amounts can differ as well as the properties.

Generally, the crystalline fraction (CF) content and the soluble fraction (SF) content of a composition only relate to its polymeric components, i.e. without other components, which are insoluble and therefore not part of the dissolution and crystallization cycles as described below in the determination method.

The crystalline and amorphous polymeric parts of the heterophasic propylene copolymer of the invention are characterized by the crystallization extraction (CRYSTEX) method.

Accordingly, the heterophasic propylene copolymer has a soluble fraction (SF) content determined by crystallisation extraction analysis (CRYSTEX) preferably in the range of from 5.0 to 20.0 wt.-%, more preferably in the range of from 7.0 to 15.0 wt.-%, yet more preferably in the range of from 8.0 to 12.0 wt.-%.

The ethylene content of said soluble fraction C2(SF), as determined by crystallisation extraction analysis (CRYSTEX), is preferably in the range of from 20 to 60 wt.-%, more preferably in the range of from 25 to 36 wt.-%.

Further, the intrinsic viscosity of said soluble fraction iV(SF), determined by crystallisation extraction analysis (CRYSTEX), is preferably in the range of from 2.0 to 4.2 dl/g, more preferably from 2.5 to 4.0 dl/g, yet more preferably from 3.0 to 3.8 dl/g.

Preferably, the crystalline fraction (CF) content determined by crystallisation extraction analysis (CRYSTEX) is in the range of from 80.0 wt.-% to 95.0 wt.-%, more preferably from 85.0 to 93.0 wt.-%, yet more preferably from 88.0 to 92.0 wt.-%.

Due to the nature of the crystallisation extraction analysis (CRYSTEX), the combined amount of soluble fraction (SF) content and crystalline fraction (CF) content adds up to 100 wt.-% of the polymeric components.

The ethylene content of said crystalline fraction C2(CF), as determined by crystallisation extraction analysis (CRYSTEX), is preferably in the range of from 0.5 to 5.0 wt.-%, more preferably from 1.0 to 2.0 wt.-%.

It is preferred that the intrinsic viscosity of said crystalline fraction iV(CF), determined by crystallisation extraction analysis (CRYSTEX), is in the range of from 3.0 to 5.0 dl/g, more preferably from 3.2 to 4.8 dl/g, yet more preferably from 3.5 to 4.5 dl/g.

Such heterophasic propylene copolymers (HECO) as described above are known in the state of the art. A suitable HECO is for example the commercially available BA212E from Borealis.

*Polypropylene composition for pipes*

The inventive polypropylene composition comprises

- a random propylene-ethylene-$\alpha$-olefin terpolymer as described above or below, and
- a polypropylene (PP), wherein the polypropylene (PP) is selected from a propylene homopolymer (H-PP) or a heterophasic propylene copolymer (HECO) as described above or below.

The inventive polypropylene composition is thereby obtainable, preferably obtained by blending the random propylene-ethylene-$\alpha$-olefin terpolymer as described above or below with the polypropylene (PP) as described above or below.

It is preferred that the composition has a melt flow rate (MFR$_2$), determined according to ISO 1133 at 230 °C at a load of 2.16 kg, in the range of from 0.1 to 1.0 g/10 min, more preferably 0.1 to 0.5 g/10 min.

The composition preferably has a crystallization temperature $T_c$, determined by differential scanning calorimetry (DSC) according to ISO 11357 / part 3 /method C2, in the range of 105 to 124 °C, preferably of 110 to 120 °C.

Further, the polypropylene composition has at least two, preferably has two melting temperatures $T_{m1}$ and $T_{m2}$, determined by differential scanning calorimetry (DSC) according to ISO 11357 / part 3 /method C2, wherein $T_{m1}$ is in the range of 140 to 155 °C, preferably of 143 to 153 °C and $T_{m2}$ is in the range of 115 to 135 °C, preferably of 119 to 130 °C.

The polypropylene composition preferably has two melting enthalpies $H_{m1}$ and $H_{m2}$, determined by differential scanning calorimetry (DSC) according to ISO 11357 / part 3 /method C2, wherein $H_{m1}$ is in the range of 60 to 100 J/g, preferably of 70 to 90 J/g and $H_{m2}$ is in the range of 0.1 to 5 J/g, preferably of 0.2 to 1.5 J/g.

The polypropylene composition preferably also has a flexural modulus determined according to ISO 178 on injection molded specimens of 80 x 10 x 4 mm$^3$ in the range of 800 to 1300 MPa, preferably in the range of 830 to 1200 MPa, more preferably in the range of 850 to 1150 MPa.

It is preferred that the polypropylene composition does not comprise further polymeric components besides the random propylene-ethylene-$\alpha$-olefin terpolymer and the polypropylene (PP), as described above.

Thus, the composition preferably comprises the propylene-ethylene-$\alpha$-olefin terpolymer and the polypropylene (PP) in a combined amount in the range of 95.0 to 99.9 wt.-%, wherein the weight ratio of the polypropylene to the terpolymer is in the range of 1:100 to 20:100, preferably 8:100 to 15:100.

The composition can further comprise additives. The amount of additives is typically in the range of from 0.1 to 2.0 wt.-%, wherein the amounts are based on the total weight of the composition.

Suitable additives are known in the state of the art. Typically, such additives are commercially available and for example described in "Plastic Additives Handbook", 6th edition 2009 of Hans Zweifel (pages 1141 to 1190).

In a preferred embodiment, the inventive polypropylene composition for pipes consists of the propylene-ethylene-$\alpha$-olefin terpolymer as described above or below, the polypropylene (PP) as described above or below, preferably the heterophasic propylene copolymer (HECO) as described above or below, and additives.

*Pipe and Use*

The invention further relates to a pipe comprising in an amount of more than 90.0 wt.-%, preferably consisting of the polypropylene composition as described above. The pipe is preferably for use in hot and/or cold water applications, more preferably is a pressure pipe for hot and/or cold water applications.

Preferably, the pipe has a time to failure in a pipe pressure test according to ISO 1167-1 and -2 on pipes having a diameter of 32 mm and a wall thickness of 3 mm at a hoop stress of 16 MPa at a temperature of 20 °C of at least 12 h, more preferably at least 20 h, even more preferably at least 30 h, wherein the type of failure is a ductile failure.

The time to failure in a pipe pressure test according to ISO 1167-1 and -2 on pipes having a diameter of 32 mm and a wall thickness of 3 mm at a hoop stress of 16 MPa at a temperature of 20 °C is preferably in the range of from more than 12 h to 1000 h, more preferably in the range of from more than 20 h to 700 h, yet more preferably in the range of from more than 30 h to 100 h, wherein the type of failure is a ductile failure.

Further, the invention also relates to the use of the polypropylene composition as described above as a pipe, preferably as a pressure pipe for hot and/or cold water applications.

All aspects of the polypropylene composition described above or below also apply to the pipe and the use of the invention.

**Examples**

**1. Determination methods**

The following definitions of terms and determination methods apply for the above general description of the invention as well as to the below examples unless otherwise defined.

**Quantification of microstructure by NMR spectroscopy**

Isotacticity and regio-regularity

Quantitative nuclear-magnetic resonance (NMR) spectroscopy was used to quantify the isotacticity and regio-regularity of the polymers.

Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics.

For polymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^{1}H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propylene was quantified based on the methyl region with correction undertaken for sites included in this region not related to primary insertion and for primary insertion sites excluded from this region:

$$P_{12} = I_{CH3} + P_{12e}$$

The total amount of propylene was quantified as the sum of primary inserted propylene and all other present regio-defects:

$$P_{total} = P_{12} + P_{21e}$$

The mole percent of 2,1 erythro regio-defects was quantified with respect to all propylene:

$$[21e] \text{ mol-\%} = 100 * (P_{21e} / P_{total})$$

Propylene-ethylene-hexene terpolymer

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance NEO 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. { klimke06, parkinson07, castignolles09} Standard single-pulse excitation was employed utilising the NOE at short recycle delays of 3s {pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm.

The amount of primary (1,2) inserted propene was quantified based on the propene methylene sites between 48.1 and 45.0 ppm ($I_{CH2}$) with correction for any included sites not related to primary insertion:

$$P_{12} = I_{CH2} + H + E + 0.5*EE$$

$$Ptotal = P_{12}$$

Characteristic signals corresponding to the incorporation of 1-hexene were observed and the comonomer fraction calculated as the fraction of 1-hexene in the polymer with respect to all monomer in the polymer:

$$fHtotal = Htotal / ( Etotal + Ptotal + Htotal)$$

The amount isolated 1-hexene incorporated in PPHPP sequences was quantified using the integral of the αB4 sites at 44.2 ppm accounting for the number of reporting sites per comonomer:

$$H = I\alpha B4 / 2$$

With no sites indicative of consecutive incorporation observed the total 1-hexen comonomer content was calculated solely on this quantity:

$$Htotal = H$$

Characteristic signals corresponding to the incorporation of ethylene were observed and the comonomer fraction calculated as the fraction of ethylene in the polymer with respect to all monomer in the polymer:

$$fEtotal = Etotal / ( Etotal + Ptotal + Htotal )$$

The amount isolated and non-consecutive ethylene incorporated in PPEPP and PPEPEPP sequences respectively was quantified using the integral of the $S\beta\beta$ sites at 24.3 ppm accounting for the number of reporting sites per comonomer:

$$E = I_{S\beta\beta}$$

When observable the amount of double consecutively incorporated ethylene in PPEEPP sequences was quantified using the integral of the $S\beta\delta$ site at 27.1 ppm accounting for the number of reporting sites per comonomer:

$$EE = I_{S\beta\delta}$$

When observable the amount triple or longer consecutively incorporated ethylene in $PP(E)_nPP$ sequences was quantified using the integral of the $S\delta\delta$ and $S\gamma\delta$ sites at 30.1 and 30.4 ppm accounting for the number of reporting sites per comonomer:

$$EEE = (I_{S\delta\delta} / 2) + (I_{S\gamma\delta} / 4)$$

The total ethylene content was calculated based on the sum of observable isolated and consecutively incorporated ethylene:

$$Etotal = E + EE + EEE$$

The mole percent comonomer incorporation is calculated from the mole fraction:

$$H\,[mol\%] = 100 * fHtotal$$

$$E\,[mol\%] = 100 * fEtotal$$

The weight percent comonomer incorporation is calculated from the mole fraction:

H [w%] = 100 * ( fHtotal * 84.16 ) / ( (fEtotal * 28.05) + (fHtotal * 84.16) + ((1- (fEtotal+fHTotal)) * 42.08) ) E[w%] = 100 * ( fEtotal * 28.05 ) / ( (fEtotal * 28.05) + (fHtotal * 84.16) + ((1- (fEtotal+fHTotal)) * 42.08) )

klimke06

Klimke, K., Parkinson, M., Piel, C., Kaminsky, W., Spiess, H.W., Wilhelm, M., Macromol. Chem. Phys. 2006; 207:382.

parkinson07

Parkinson, M., Klimke, K., Spiess, H.W., Wilhelm, M., Macromol. Chem. Phys. 2007; 208:2128.

pollard04

Pollard, M., Klimke, K., Graf, R., Spiess, H.W., Wilhelm, M., Sperber, O., Piel, C., Kaminsky, W., Macromolecules 2004; 37:813.

filip05

Filip, X., Tripon, C., Filip, C., J. Mag. Resn. 2005, 176, 239

griffin07

Griffin, J.M., Tripon, C., Samoson, A., Filip, C., and Brown, S.P., Mag. Res. in Chem. 2007 45, S1, S198 castignolles09

Castignolles, P., Graf, R., Parkinson, M., Wilhelm, M., Gaborieau, M., Polymer 50 (2009) 2373

**Calculation** of the ethylene comonomer content of the second random propylene-ethylene-α-olefin terpolymer fraction (B):

$$\frac{C_2(terpolymer) - w(A) \times C_2(A)}{w(B)} = C_2(B)$$

wherein

w(A)     is the weight fraction [split wt.-%] of the first random propylene-ethylene-α-olefin terpolymer fraction (A),

w(B)     is the weight fraction [split wt.-%] of second random propylene-ethylene-α-olefin terpolymer fraction (B),

$C_2(A)$     is the comonomer content [in wt.-%] of the first first random propylene-ethylene-α-olefin terpolymer fraction (A),

$C_2(terpolymer)$     is the comonomer content [in wt.-%] of the random propylene-ethylene-α-olefin terpolymer,

$C_2(B)$     is the calculated comonomer content [in wt.-%] of the second random propylene-ethylene-α-olefin terpolymer fraction (B).

The ethylene comonomer content in mol% can be obtained analogously.

**Calculation** of α-olefin ($C_{4-8}$) comonomer content of the second random propylene-ethylene-α-olefin terpolymer fraction (B):

$$\frac{C_{4-8}(terpolymer) - w(A) \times C_{4-8}(A)}{w(B)} = C_{4-8}(B)$$

wherein

w(A)     is the weight fraction [split wt%] of the first random propylene-ethylene-α-olefin terpolymer fraction (A),

w(B)     is the weight fraction [split wt %] of second random propylene-ethylene-α-olefin terpolymer fraction (B),

$C_{4-8}(A)$     is the comonomer content [in wt-%] of the first random propylene-ethylene-α-olefin terpolymer fraction (A),

$C_{4-8}(terpolymer)$     is the comonomer content [in wt-%] of the random propylene-ethylene-α-olefin terpolymer,

$C_{4-8}(B)$     is the calculated comonomer content [in wt-%] of the second propylene-ethylene-α-olefin terpolymer fraction (B).

The α-olefin ($C_{4-8}$) comonomer content in mol% can be obtained analogously.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**Calculation** of the $MFR_2$ of the second random propylene-ethylene-α-olefin terpolymer fraction (B):

$$10^{\frac{\log(MFR_2\,(terpolymer)) - w(A) \times \log(MFR_2(A))}{w(B)}} = MFR_2(B)$$

w(A)     is the weight fraction [split wt.-%] of the first random propylene-ethylene-α-olefin terpolymer fraction (A),

w(B)     is the weight fraction [split wt.-%] of the second random propylene-ethylene-α-olefin terpolymer fraction (B),

$MFR_2(A)$     is the $MFR_2$ [in g/10 min] of the first random propylene-ethylene-α-olefin terpolymer fraction (A),

$MFR_2$(terpolymer)     is the $MFR_2$ [in g/10 min] of the random propylene-ethylene-$\alpha$-olefin terpolymer,

$MFR_2$(B)     is the calculated $MFR_2$ [in g/10 min] of the second random propylene-ethylene-$\alpha$-olefin terpolymer fraction (B).

**Xylene Solubles (XCS)**

The xylene soluble (XCS) fraction as defined and described in the present invention is determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows: XS [%] = $(100 \cdot m \cdot V_0)/(m_0 \cdot V)$; $m_0$ = initial polymer amount [g]; m = weight of residue [g]; $V_0$ = initial volume [ml]; V = volume of analysed sample [ml].

**Flexural modulus**

The flexural modulus is determined according to ISO 178. The test specimens have a dimension of 80 x 10 x 4.0 $mm^3$ (length x width x thickness) and are prepared by injection molding according to EN ISO 1873-2. The length of the span between the supports is 64 mm, the test speed 2 mm/min.

**Notched impact strength (NIS)**

The Charpy notched impact strength (NIS) was measured according to ISO 179 1eA at +23 °C, using injection moulded bar test specimens of 80 x 10 x 4 $mm^3$ prepared in accordance with EN ISO 1873-2.

**Differential scanning analysis (DSC)**

Melting peak temperatures ($T_{p,m}$), melting enthalpies ($H_m$), crystallization peak temperature ($T_{p,c}$) and crystallization enthalpy ($H_c$) were measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 - 26 - to +225 °C. Crystallization peak temperature ($T_{p,c}$) and crystallization enthalpy ($H_c$) were determined from the cooling step, while the two melting peak temperatures ($T_{m1}$) and ($T_{m2}$) and two melting enthalpies ($H_{m1}$) and ($H_{m2}$) were determined from the second heating step.

**Crystallization extraction (CRYSTEX) for propylene-ethylene copolymer and HECO**

Note: Crystallization extraction (CRYSTEX) analyses the polymeric part of each component, with non-polymeric parts, such as any fillers or particulate pigments, not contributing to the reported CRYSTEX data presented.

**Determination of crystalline and soluble fractions and their respective properties (iV and Ethylene content)**

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (iV) an online 2-capillary viscometer is used. IR4 detector is a multiple wavelength detector measuring IR absorbance at two different bands (CH3 stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. IR4 detector is calibrated with series of 8 EP copolymers with known ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentration expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

$$CH_3/1000C = a + b*Abs(CH) + c*Abs(CH_3) + d*(Abs(CH_3)/Abs(CH)) + e*(Abs(CH_3)/Abs(CH))^2$$

The constants a to f for equation 1 and a to e for equation 2 were determined by using least square regression analysis.

The $CH_3/1000C$ is converted to the ethylene content in wt.-% using following relationship:

$$\text{wt.-\% (Ethylene in EP Copolymers)} = 100 - CH_3/1000TC * 0.3 \qquad \text{(Equation 3)}$$

Amount of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. A linear calibration curve is used.

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP copolymers and PP polymers with iV = 2-4 dL/g. The determined calibration curve is linear.

The samples to be analyzed are weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the $N_2$ atmosphere during dissolution.

For PP composition containing inorganic fillers or pigments or any other non-TCB soluble polymeric substances removal of these is required. This can be done by hot filtration prior injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

**Pipe pressure test**

The pressure test performance of pipes produced from the inventive composition and the comparative composition was tested in accordance with ISO 1167-1 and-2. The pipes having a diameter of 32 mm and a wall thickness of 3 mm were produced in accordance with ISO 1167-2 on a conventional pipe extrusion line, then subjected to a circumferential (hoop) stress of 16 MPa at a temperature of 20°C in a water-in-water setup in accordance with ISO 1167-1. The time in hours to failure was registered.

**2. Experimental**

The polymerization of the random $C_3C_2C_6$ terpolymer was carried out in pilot scale. A Borstar® loop - gas phase reactor set up was used.

A bicomponent Ziegler-Natta catalyst system was used for the polymerization of the terpolymer. The bicomponent Ziegler-Natta catalyst system was a 1:1 (w/w) mixture of two Ziegler-Natta-catalyst systems ZN1 and ZN2.

The used bicomponent Ziegler-Natta catalyst mixture was obtained as described below:

0.5 kg of ZN2 were weighted into a catalyst preparation vessel under the protection of $N_2$. Then 2 kg of white oil (Finavestan A 360 B, CAS-Nr. 8042-47-5, supplied by Totalenergies) were add into the vessel. This vessel was tumbled at room temperature about 8 h to form homogeneous mixture. The final mixture had 20 wt.-% of ZN2 in the white oil. Similar process is applied to ZN1 to form the same mixture with 20 wt.-% of ZN1. These two mixtures were transferred to the same vessel in a 1:1 weight ratio and tumbled at room temperature for 2 h, thereby obtaining a homogeneous mixture. The obtained 1:1 mixture was used for further polymerization. All the preparations were done under $N_2$ protection.

ZN1: Phthalate-free Ziegler-Natta catalyst used in the inventive examples of WO 2016/066446 A1 and having citraconate as the internal donor.

ZN2: Ziegler-Natta-catalyst ZN180-2M, commercially available from LyondellBasell Industries.

As a cocatalyst, triethyl-aluminium (TEAL) was used.

The bicomponent Ziegler-Natta catalyst system was introduced in the pre-polymerization reactor.

The polymerization conditions for the terpolymer are shown in table 1 below.

*Table 1: Polymerization conditions for the $C_3C_2C_6$ terpolymer*

|  | $C_3C_2C_6$ terpolymer |
|---|---|
| **Prepolymerization** |  |
| Temp. (°C) | 20.0 |
| Press. (kPa) | 5432.7 |
| Catalyst feeding rate (g/h) | 0.9 |
| TEAL feed (g/ t C3) | 150 |
| Donor feed (g/ t C3) | 45.0 |
| Residence time (h) | 0.4 |
| **Loop reactor** (Fraction A) |  |
| Temp. (°C) | 67.0 |
| Press. (kPa) | 5402.1 |
| Feed H2/C3 ratio (mol/kmol) | 0.28 |
| Feed C2/C3 ratio (mol/kmol) | 4.2 |
| Feed C6/C3 ratio (mol/kmol) | 116 |
| Polymer Split (wt.-%) | 56.4 |
| $MFR_2$ (g/10 min) | 0.62 |
| C2 (wt.-%) | 1.2 |
| C6 (wt.-%) | 2.0 |
| C2 (mol%) | 1.8 |
| C6 (mol%) | 1.0 |
| XCS (wt.-%) | 3.9 |
| **Gas phase reactor** (Fraction B) |  |
| Temp. (°C) | 79.8 |
| Press. (kPa) | 2200 |
| H2/C3 ratio (mol/kmol) | 0.67 |
| C2/C3 ratio (mol/kmol) | 19.9 |
| C6/C3 ratio (mol/kmol) | 37.6 |
| Polymer Split (wt.-%) | 43.6 |
| calc. $MFR_2$ made in GPR1(g/10 min) | 0.08 |
| calc. C2 made in GPR1(wt.-%) | 2.11 |
| calc. C2 made in GPR1(mol%) | 3.18 |
| calc. C6 made in GPR1(wt.-%) | 2.46 |
| calc. C6 made in GPR1(mol%) | 1.23 |
| **Mixer** |  |
| $MFR_2$ (g/10 min) | 0.25 |
| XCS (wt.-%) | 8.80 |
| C2 (wt.-%) | 1.60 |

(continued)

| Mixer | |
|---|---|
| C2 (mol%) | 2.40 |
| C6 (wt.-%) | 2.20 |
| C6 (mol%) | 1.10 |
| $T_m$(°C) | 146 |
| $T_c$ (°C) | 103 |
| 2,1 regiodefects (mol%) | 0.0 |

For the inventive compositions IE1 and IE2, the obtained random $C_3C_2C_6$ terpolymer was compounded with the following additives:

- KINOX-30G (1,3,5-Trimethyl-2,4,6-tris(3,5-di-tert-butyl- 4-hydroxybenzyl)benzene, commercially available from HPL Additives Limited; CAS-no. 1709-70-2),
- Irganox 1010 (pentaerythrityl-tetrakis(3-(3',5'-di-tert. butyl-4-hydroxyphenyl)-propionate, available from BASF AG, Germany; CAS-no. 6683-19-8),
- Irgafos 168 (tris (2,4-di-t-butylphenyl) phosphite, available from BASF AG, Germany; CAS-no. 31570-04-4), and
- Calcium stearate (CAS-no.1592-23-0, commercially available from Faci, Italy)

and with a polypropylene modifier (HECO1 or H-PP1).

HECO1 was a heterophasic polypropylene ethylene copolymer containing poly(vinylcyclohexane) (pVCH) as the sole nucleating agent and having the following properties.

*Table 2: Properties of the polypropylene modifier HECO1.*

| Properties | unit | HECO1 |
|---|---|---|
| $MFR_2$ | g/10min | 0.25 |
| $T_c$ | °C | 129 |
| Tm | °C | 167 |
| XCS | wt.-% | 10 |
| **CRYSTEX** | | |
| SF | wt.-% | 10.76 |
| CF | wt.-% | 89.24 |
| C2 | wt.-% | 4.72 |
| C2(SF) | wt.-% | 31.88 |
| C2(CF) | wt.-% | 1.45 |
| iV | dL/g | 4.02 |
| iV(SF) | dL/g | 3.37 |
| iV(CF) | dL/g | 3.98 |

HECO1 was produced in a Borstar pilot plant, with a Borstar® loop - gas phase reactor - gas phase reactor set up. The polymerization details are in Table 3. The donor D is used as external donor. The catalyst is the same as used for HECO1 on page 9-10 of EP 3140348 B1.

*Table 3: Polymerization conditions for HECO1*

| | HECO1 |
|---|---|
| **Prepolymerization reactor** | |
| Temp. (°C) | 20 |

(continued)

|  | HECO1 |
|---|---|
| **Prepolymerization reactor** |  |
| Press. (kPa) | 4820 |
| Catalyst feed (g/h) | 2.8 |
| Donor (g/t propylene) | 50 |
| TEAL/propylene (g/t propylene) | 150 |
| H2/C3 feed (mol/kmol) | 0.30 |
| **Loop reactor** |  |
| Temp. (°C) | 75 |
| Press. (kPa) | 4914 |
| Feed H2/C3 ratio (mol/kmol) | 0.07 |
| Feed C2/C3 ratio (mol/kmol) | 0 |
| Split (wt-%) | 46 |
| MFR2 (g/10 min) | 0.06 |
| XS (%) | 1.6 |
| Total C2 (wt.-%) | 0 |
| **GPR1** |  |
| Temp. (°C) | 70.0 |
| Press. (kPa) | 1820.0 |
| H2/C3 ratio (mol/kmol) | 17.2 |
| C2/C3 ratio (mol/kmol) | 0.0 |
| Loop GPR Split (wt.-%) | 46 |
| MFR2 (g/10 min) | 0,26 |
| Total C2 (wt.-%) | 0 |
| XS (%) | 1.4 |
| **GPR2** |  |
| Temp. (°C) | 65 |
| Press. (kPa) | 1700 |
| C2/C3 ratio (mol/kmol) | 399 |
| H2/C2 ratio (mol/kmol) | 36 |
| Polymer Split (wt.-%) | 8.00 |

H-PP1 was produced in a Borstar pilot plant, with a Borstar® loop - gas phase reactor set up. The details are in Table 4. The donor D is used as external donor. The catalyst is the Ziegler-Natta catalyst as used in the inventive examples of WO2016/066446 A1 (i.e. with vinylcyclohexane (VCH) prepolymerization).

The properties are in Table 5.

*Table 4: Polymerization conditions for H-PP1*

|  | H-PP1 |
|---|---|
| **Prepolymerisation reactor** |  |
| Temperature (°C) | 30 |
| Pressure (kPa) | 5053 |

(continued)

| | H-PP1 |
|---|---|
| **Prepolymerisation reactor** | |
| Propylene feed (kg/h) | 62 |
| H2/C3 ratio (mol/kmol) | 1.0 |
| Catalyst feed (g/h) | 2.3 |
| D-Donor feed (g/t propylene) | 15 |
| TEAL feed (g/t propylene) | 150 |
| Residence time (h) | 0.3 |
| **Loop reactor** | |
| Temperature (°C) | 80 |
| Pressure (kPa) | 5147 |
| H2/C3 ratio (mol/kmol) | 0.63 |
| C2/C3 ratio (mol/kmol) | 1.21 |
| Split % | 58 |
| MFR2 (g/10 min) | 3.29 |
| XS (%) | 2.53 |
| C2 content (%) | 0.48 |
| **Gas phase reactor** | |
| Temperature (°C) | 80 |
| Pressure (kPa) | 2500 |
| H2/C3 ratio (mol/kmol) | 10.0 |
| C2/C3 ratio (mol/kmol) | 5.5 |
| Split % | 42 |

Table 5: Properties of H-PP1.

| Properties | unit | H-PP1 |
|---|---|---|
| $MFR_2$ | g/10min | 4.0 |
| C2 | wt.-% | 0.7 |
| $T_c$ | °C | 127 |
| $T_m$ | °C | 163 |
| XCS | wt.-% | 1.96 |

Table 6: Inventive and comparative compositions and their properties.

| Composition | | IE1 | IE2 | CE1 |
|---|---|---|---|---|
| $C_3C_2C_6$ terpolymer | wt.-% | 89.35 | 97.35 | 99.35 |
| KINOX-30G | wt.-% | 0.24 | 0.24 | 0.24 |
| I1010 | wt.-% | 0.24 | 0.24 | 0.24 |
| I168 | wt.-% | 0.1 | 0.1 | 0.1 |
| CaSt | wt.-% | 0.07 | 0.07 | 0.07 |
| HECO1 | wt.-% | 10 | | |

(continued)

| Composition | | IE1 | IE2 | CE1 |
|---|---|---|---|---|
| H-PP1 | wt.-% | | 2 | |
| **Properties** | | | | |
| MFR$_2$ | g/10min | 0.26 | 0.26 | 0.25 |
| Tc | °C | 118 | 113 | 103 |
| T$_{m1}$ | °C | 150 | 147 | 146 |
| T$_{m2}$ | °C | 127 | 121 | |
| H$_{m1}$ | J/g | 82 | 77 | |
| H$_{m2}$ | J/g | 0.8 | 0.5 | |
| FM | MPa | 954 | 879 | 807.0 |
| NIS | kJ/m$^2$ | 32.6 | 11.4 | 9.1 |

As can be seen in table 6, the modification of the $C_3C_2C_6$ terpolymer with a polypropylene (IE1 and IE2) increases the Flexural modulus (FM) and the notched Charpy impact strength (NIS).

From the inventive and the comparative compositions IE1, IE2 and CE, the inventive pipes IP1 and IP2, and the comparative pipe CP were produced respectively on a Battenfeld Pro pipe extrusion line having a diameter of 32 mm and a wall thickness of 3 mm.

The typical conditions were the following:

Melt temperature: 224 °C
Output: 30 kg/h
Screw speed: 38 rpm
Cooling water temperature: 20 °C
Vacuum spray tank: 0.23 bar
Water flow in calibrator inlet: 4 l/h.

The pipes had the following times to failure in a pipe pressure test.

*Table 7*: Pipe properties of the inventive and comparative compositions.

| Pipe pressure test | | IP1 | IP2 | CP |
|---|---|---|---|---|
| 20 °C/16 MPa | time to failure [h] | 68 | 39 | 9.6 |
| | type of failure | Ductile | Ductile | Ductile |

As shown in table 7, the time to failure was significantly elongated for pipes IP1 and IP2 comprising the inventive compositions IE1 or IE2.

**Claims**

1.   A polypropylene composition for pipes, **characterized in that** the polypropylene composition comprises

i) 80 to 99 wt.-%, based on the total weight of the composition, of a random propylene-ethylene-α-olefin terpolymer, wherein the α-olefin is selected from a C4 to C8 α-olefin, preferably is 1-butene or 1-hexene, more preferably is 1-hexene; and
ii) 1 to 20 wt.-% , based on the total weight of the composition, of a polypropylene (PP), wherein the polypropylene (PP) is selected from a propylene homopolymer (H-PP) or a heterophasic propylene copolymer (HECO);
wherein the random propylene-ethylene-α-olefin terpolymer

- comprises a total amount of units derived from ethylene (C2) in the range of from 0.1 to 5.0 mol%, preferably 1.0 to 4.0 mol%, more preferably 1.5 to 3.0 mol%, based on the total weight of the terpolymer, determined by

quantitative $^{13}$C-NMR spectroscopy;
- has a melt flow rate (MFR$_2$), determined according to ISO 1133 at 230 °C at a load of 2.16 kg, in the range of from 0.1 to 1.0 g/10 min, preferably of from 0.1 to 0.5 g/10 min; and

wherein the polypropylene (PP)

- has a melt flow rate (MFR$_2$), determined according to ISO 1133 at 230 °C at a load of 2.16 kg, in the range of from 0.1 to 5.0 g/10 min, preferably from 0.1 to 1.0 g/10 min.

2. The polypropylene composition of claim 1, **characterized in that** the polypropylene (PP) comprises a polymeric nucleating agent, preferably poly(vinylcyclohexane) (pVCH), wherein the polymeric nucleating agent is preferably the sole nucleating agent in the composition.

3. The polypropylene composition of any of the preceding claims, **characterized in that** the polypropylene (PP) has

- a crystallization temperature $T_c$, determined by differential scanning calorimetry (DSC) according to ISO 11357 / part 3 /method C2, of more than 124 °C, preferably in the range of 125 to 140 °C; and
- a melting temperature $T_m$, determined by differential scanning calorimetry (DSC) according to ISO 11357 / part 3 /method C2, in the range of 160 °C to 170 °C, preferably of 165 °C to 170 °C.

4. The polypropylene composition of any of the preceding claims, **characterized in that** the composition has a melt flow rate (MFR$_2$), determined according to ISO 1133 at 230 °C at a load of 2.16 kg, in the range of from 0.1 to 1.0 g/10 min, preferably of from 0.1 to 0.5 g/10 min.

5. The polypropylene composition of any of the preceding claims, **characterized in that** the composition has a crystallization temperature $T_c$, determined by differential scanning calorimetry (DSC) according to ISO 11357 / part 3 /method C2, in the range of 105 to 124 °C, preferably of 110 to 120 °C.

6. The polypropylene composition of any of the preceding claims, **characterized in that** the composition has at least two, preferably two melting temperatures $T_{m1}$ and $T_{m2}$, determined by differential scanning calorimetry (DSC) according to ISO 11357 / part 3 /method C2, wherein $T_{m1}$ is in the range of 140 to 155 °C, preferably of 143 to 153 °C and $T_{m2}$ is in the range of 115 to 135 °C, preferably of 119 to 130 °C.

7. The polypropylene composition of any of the preceding claims, **characterized in that** the molar ratio in the random propylene-ethylene-α-olefin terpolymer between units derived from ethylene and units derived from the α-olefin is in the range of from 5:1 to 1:1, preferably from 3:1 to 1.8:1.

8. The polypropylene composition of any of the preceding claims, **characterized in that** the α-olefin of the propylene-ethylene-α-olefin terpolymer is 1-hexene and the terpolymer comprises a total amount of units derived from 1-hexene (C6) in the range of from 0.5 to 5.0 mol%, preferably 0.8 to 2.0 mol%, based on the total weight of the terpolymer, determined by quantitative $^{13}$C-NMR spectroscopy.

9. The polypropylene composition of any of the preceding claims, **characterized in that** the polypropylene (PP)

- is a heterophasic propylene copolymer (HECO) having a matrix phase and a dispersed phase; and
- comprises a total amount of units derived from ethylene (C2) in the range of from 2.0 to 10 wt.-%, preferably of from 3.0 to 8.0 wt.-%, more preferably of from 4.0 to 6.0 wt.-%, based on the total weight of the copolymer, determined by crystallization extraction analysis (CRYSTEX).

10. The polypropylene composition of claim 9, **characterized in that** the polypropylene (PP) has

- a soluble fraction (SF) content determined by crystallization extraction analysis (CRYSTEX), in the range of from 5.0 to 20.0 wt.-%, preferably in the range of from 7.0 to 15.0 wt.-%, more preferably in the range of from 8.0 to 12.0 wt.-%, and
- an ethylene content of said soluble fraction C2(SF), as determined by crystallization extraction analysis (CRYSTEX), is in the range of from 20 to 60 wt.-%, preferably in the range of from 25 to 36 wt.-%.

11. The polypropylene composition of any of the preceding claims, **characterized in that** the propylene-ethylene-α-olefin terpolymer has a xylene cold soluble content (XCS), as determined according to ISO 16152, in the range of from 5.0 to 12.0 wt.-%, preferably of from 7.0 to 11.0 wt.-%.

12. The polypropylene composition of any of the preceding claims, **characterized in that** the composition comprises the propylene-ethylene-$\alpha$-olefin terpolymer and the polypropylene (PP) in a combined amount in the range of 95.0 to 99.9 wt.-%, wherein the weight ratio of the polypropylene to the terpolymer is in the range of 1:100 to 20:100, preferably 8:100 to 15:100.

13. A pipe comprising the polypropylene composition of any of the preceding claims in an amount of more than 90.0 wt.-%, preferably consisting of the polypropylene composition of any of the preceding claims, wherein the pipe is preferably used for hot and/or cold water applications, more preferably is a pressure pipe for hot and/or cold water applications.

14. The pipe of claim 13, **characterized in that** the pipe has a time to failure in a pipe pressure test according to ISO 1167-1 and-2 on pipes having a diameter of 32 mm and a wall thickness of 3 mm at a hoop stress of 16 MPa at a temperature of 20 °C of at least 12 h, preferably of at least 20 h, more preferably of at least 30 h, wherein the type of failure is a ductile failure.

15. Use of the polypropylene composition of any of claims 1 to 12 as a pipe, preferably as a pipe for hot and/or cold water applications.

## EUROPEAN SEARCH REPORT

**Application Number**

EP 24 17 3396

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 653 496 A1 (BASELL POLYOLEFINE GMBH [DE]) 23 October 2013 (2013-10-23) <br><br> * the whole document * <br> ----- | 1,2,4, 7-9, 11-15 | INV. <br> C08F210/06 <br> C08L23/14 <br> C08F2/00 |
| X | US 2014/349051 A1 (GALVAN MONICA [IT] ET AL) 27 November 2014 (2014-11-27) <br> * the whole document * <br> ----- | 1,2,7-9, 11-15 | |
| X | US 2019/338113 A1 (GALVAN MONICA [IT] ET AL) 7 November 2019 (2019-11-07) <br><br> * the whole document * <br> ----- | 1,2,4, 7-9, 11-15 | |

**TECHNICAL FIELDS SEARCHED (IPC)**

C08L
C08F

The present search report has been drawn up for all claims

| Place of search | Date of completion of the search | Examiner |
|---|---|---|
| Munich | 25 October 2024 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3396

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2024

| Patent document cited in search report | | Publication date | Patent family member(s) | | Publication date |
|---|---|---|---|---|---|
| EP 2653496 | A1 | 23-10-2013 | NONE | | |
| US 2014349051 | A1 | 27-11-2014 | BR 112014013540 | A2 | 13-06-2017 |
| | | | CN 104520374 | A | 15-04-2015 |
| | | | EP 2788426 | A1 | 15-10-2014 |
| | | | ES 2563447 | T3 | 15-03-2016 |
| | | | RU 2583372 | C1 | 10-05-2016 |
| | | | US 2014349051 | A1 | 27-11-2014 |
| | | | WO 2013083617 | A1 | 13-06-2013 |
| US 2019338113 | A1 | 07-11-2019 | BR 112019004611 | A2 | 18-06-2019 |
| | | | CN 109790344 | A | 21-05-2019 |
| | | | EP 3523370 | A1 | 14-08-2019 |
| | | | RU 2713738 | C1 | 07-02-2020 |
| | | | US 2019338113 | A1 | 07-11-2019 |
| | | | WO 2018065242 | A1 | 12-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2585528 A1
- EP 3387066 A1
- EP 0887379 A
- WO 9212182 A
- WO 2004000899 A
- WO 2004111095 A
- WO 9924478 A
- WO 9924479 A
- WO 0068315 A
- WO 2016066446 A1
- EP 3140348 B1

**Non-patent literature cited in the description**

- *Chemical Reviews*, 2000, vol. 100 (4), 1316-1327
- **HANS ZWEIFEL**. Plastic Additives Handbook. 2009, 1141-1190
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 8042-47-5
- *CHEMICAL ABSTRACTS*, 1709-70-2
- *CHEMICAL ABSTRACTS*, 6683-19-8
- *CHEMICAL ABSTRACTS*, 31570-04-4
- *CHEMICAL ABSTRACTS*, 1592-23-0